# EUROPÄISCHE PATENTSCHRIFT

(11) **EP 2 946 030 B1**
(45) Veröffentlichungstag und Bekanntmachung des Hinweises auf die Patenterteilung: **08.03.2017**
(21) Anmeldenummer: 14700569.8
(22) Anmeldetag: 08.01.2014
(51) Int. Cl.: C23C 28/00, F16J 9/26

(54) **GLEITELEMENT, INSBESONDERE KOLBENRING, MIT EINER BESCHICHTUNG**
SLIDING ELEMENT, IN PARTICULAR A PISTON RING, HAVING A COATING
ÉLÉMENT COULISSANT, EN PARTICULIER SEGMENT DE PISTON, POURVU D'UN REVÊTEMENT

(30) Priorität: 21.01.2013 DE 102013200846
(43) Veröffentlichungstag der Anmeldung: 25.11.2015
(73) Patentinhaber: Federal-Mogul Burscheid GmbH, 51399 Burscheid (DE)
(72) Erfinder: IVANOV, Yuriy, 51339 Burgscheid (DE); KENNEDY, Marcus, 40477 Düsseldorf (DE); LAMMERS, Ralf, 42929 Wermelskirchen (DE); ZINNABOLD, Michael, 51399 Burscheid (DE)
(74) Vertreter: Hoffmann Eitle
(86) Internationale Anmeldenummer: PCT/EP2014/050207
(87) Internationale Veröffentlichungsnummer: WO 2014/111294

(56) Entgegenhaltungen:
- EP-A1- 2 505 685
- WO-A1-2009/106201
- JP-A- 2008 081 630
- US-B1- 6 228 471

## Beschreibung

### Technisches Gebiet der Erfindung

Die Erfindung betrifft ein Gleitelement, insbesondere einen Kolbenring.

Gleitelemente, wie z.B. Kolbenringe, weisen Laufflächen auf, an denen sie mit einem Reibpartner in gleitenden Kontakt sind. Das tribologische System ist komplex und wird maßgeblich z.B. durch die Materialpaarung der Reibpartner und die Umgebungsbedingungen wie z.B. Druck, Temperatur und umgebende Medien, bestimmt. Gerade bei modernen Motoren treten besonders hohe Belastungen an z.B. den Kolbenringen auf. Um die Funktionsfähigkeit und Lebensdauer der Bauteile zu gewährleisten und zu verlängern, können die Laufflächeneigenschaften der Gleitelemente gezielt optimiert werden.

### Stand der Technik

Solche Optimierungen umfassen oft das Aufbringen mehr oder weniger komplexer Schichtsysteme mittels z.B. thermischer Spritzverfahren, galvanischer Verfahren oder Verfahren der Dünnschichttechnologie. Das primäre Ziel solcher Schichten ist der Verschleißschutz, dabei wird zunächst meist auf eine hohe Härte der Schichten abgezielt. Als besonders harte und haltbare Schichten haben sich diamantähnliche Kohlenstoffschichten (diamond-like carbon, DLC) erwiesen. Diese können in vielfältiger Weise z.B. durch die Veränderung ihres C-C Bindungscharakters, der verschiedenen Bindungsanteile des Kohlenstoffs und durch die An- oder Abwesenheit von Wasserstoff und Metallen in ihren Eigenschaften variiert werden. Oft werden unter diesen Verschleißschutzschichten Haftschichten aufgebracht, die eine besonders haltbare und feste Verbindung der hochbelasteten Verschleißschutzschicht mit dem Grundwerkstoff des Gleitelements sicherstellen sollen.

Die ausschließliche Verwendung sehr harter DLC-Schichten bringt jedoch einige technologische Probleme mit sich. Zum einen müssen die Oberflächen dieser Schichten sehr glatt sein, damit es bei hoher Flächenpressung nicht zu Zerrüttungen auf der Oberfläche und damit zum Versagen des Schichtsystems kommt. Es kann ferner gezeigt werden, dass z.B. der Ring- und Linerverschleiß signifikant mit der Rauheit der Verschleißschutzschichten ansteigen. Daher ist es erforderlich die Oberflächen der Verschleißschutzschichten vor deren Einsatz weitestgehend zu glätten, dies ist aber mit hohem technischem Aufwand verbunden sowie sehr kostenintensiv. Zum Beispiel beschreibt die EP 1 829 986 B1 ein Verfahren wie solch harte Kohlenstoff-basierte Schichten mittels borsten- oder plattenförmiger Elemente bearbeitet werden können. Zum anderen weisen sehr harte Verschleißschutzschichten ein ungünstiges Einlaufverhalten auf. Auf Grund ihrer hohen Härte erfolgt der Einlauf auf Kosten des Reibpartners, der in der Einlaufphase erhöhten Verschleiß erfährt, zudem kann es zur Riefenbildung und/oder zu Brandspuren kommen.

In Hinblick auf das Einlaufverhalten, kann es sinnvoll sein, Einlaufschichten, die weicher als die Verschleißschutzschichten sind, auf diesen vorzusehen. Das Ziel dieser Schichten ist es eine Art tribologisches "Gleichgewicht" zu erzeugen, indem sich die Einlaufschicht im Erstkontakt mit dem Reibpartner abträgt und sich dabei eine gegenseitige Anpassung der Reibpartner vollzieht. Nach der Einlaufphase verlangsamt und stabilisiert sich der Reibverschleiß und die harte Verschleißschutzschicht gewährleistet dann andauernd günstige Reibeigenschaften und die Lebensdauerbeständigkeit.

Die DE 10 2005 063 123 B3 beschreibt ein Schichtsystem auf einem Gleitelement von innen nach außen bestehend aus einer Verschleißschutzschicht, einer Haftschicht und einer Einlaufschicht des Typs Me-C:H in der ferner Hartstoffpartikeln z.B. WC enthalten sind.

Aus der DE 10 2008 042 747 A1 geht ein Gleitelement mit einer Beschichtung hervor, die von innen nach außen eine Haftschicht, eine PVD-Schicht, optional eine Kohlenstoff-basierte Schicht des Typs a-C:H:W, eine Kohlenstoff-basierte Schicht des Typs a-C:H und eine weitere Kohlenstoff-basierte Schicht des Typs a-C:H, aufweist. Dabei ist vorgesehen, dass die äußere Kohlenstoffschicht weicher ist als die darunter liegende Kohlenstoffschicht.

Darüber hinaus beschreibt das Dokument JP 2008 081630A ein herkömmliche Gleitelement.

### Darstellung der Erfindung

Der Erfindung liegt die Aufgabe zu Grunde, ein Gleitelement, insbesondere einen Kolbenring für Verbrennungsmotoren, mit optimalen mechanischen sowie tribologischen Eigenschaften zu schaffen. Genauer besteht die Aufgabe darin, ein solches Gleitelement bereitzustellen, dessen Oberfläche ein günstiges Einlaufverhalten, d.h. verkürzte Einlaufzeiten, verringerten Gegenkörperverschleiß und einen geringeren Kraftstoff- und Ölverbrauch während des Einlaufs, aufweist. Weiter soll eine bessere Bearbeitbarkeit der Oberfläche des Gleitelements erreicht werden.

Erfindungsgemäß wird die Aufgabe durch das Gleitelement nach Anspruch 1 gelöst. Vorteilhafte Ausgestaltungen und Weiterbildungen der Erfindung können mit den in den untergeordneten Ansprüchen genannten Merkmalen erreicht werden.

Das erfindungsgemäße Gleitelement, insbesondere ein Kolbenring, weist mindestens eine Lauffläche auf, wobei die Lauffläche selbst eine Beschichtung aufweist, die von innen nach außen zumindest eine erste Haftschicht, eine harte wasserstofffreie DLC-Schicht, eine zweite Haftschicht, eine weiche wasserstoffhaltige, metall- und/oder metallkarbidhaltige DLC-Schicht, die weicher ist als die harte wasserstofffreie DLC-Schicht, und eine harte wasserstoffhaltige DLC-Schicht, die härter ist als die weiche wasserstoffhaltige, metall- und/oder metallkarbidhaltige DLC-Schicht, aufweist.

Die innere harte wasserstofffreie DLC-Schicht übernimmt nach dem Einlaufen den Verschleißschutz des Gleitelements im langfristigen Betrieb und gewährleistet damit eine gute Lebensdauerbeständigkeit und Funktionsfähigkeit des Gleitelements. Um diese Funktion optimal zu erfüllen wird bevorzugt eine Schicht vom Typ ta-C d.h. eine tetraedrische, wasserstofffreie, amorphe Kohlenstoffschicht gewählt, die sich durch hohe erreichbare Härten auszeichnet.

Die weiche wasserstoffhaltige, metall- und/oder metallkarbidhaltige DLC-Schicht, ist insbesondere verglichen mit der zuvor beschriebenen DLC-Schicht vergleichsweise weich, weist aber jedoch weiter ein günstiges Reibverhalten auf. Diese Schicht kann bevorzugt als tetraedrische, wasserstofffreie, amorphe Kohlenstoffschicht (ta-C) oder als wasserstoffhaltige, amorphe Kohlenstoffschicht (a-C:H) oder als metall- und wasserstoffhaltige, amorphe Kohlenstoffschicht (Me-DLC) ausgebildet sein. Die weiche DLC-Schicht agiert als stabilisierende Zwischenschicht zwischen den beiden harten DLC-Schichten und stabilisiert dabei das Schichtsystem gegen die hohen auftretenden Scherkräfte.

Die abschließende äußere Schicht der Beschichtung wird durch eine harte wasserstoffhaltige DLC-Schicht gebildet. Diese Schicht wird dabei bevorzugt etwas weniger hart ausgeführt und besitzt einen geringeren Verschleißwiderstand als die innere harte DLC-Schicht. Dadurch kann eine geringere Oberflächenrauheit durch Glättungsprozesse vor dem Einsatz des Gleitelements, z.B. in einem Verbrennungsmotor, vergleichsweise günstig erzielt werden. Die Schicht eignet sich somit als Einlaufschicht, womit ein gutes Einlaufverhalten, beispielsweise eines Kolbenrings mit einer Zylinderlauffläche realisiert wird, was mit insgesamt kurzen Einlaufzeiten, einem reduzierten Gegenkörperverschleiß und geringerem Kraftstoff- und Ölverbrauch sowie Blow-by in der Einlaufphase einhergeht.

Das Schichtsystem wird ferner durch zwei Haftschichten gebildet, die eine gute stoffschlüssige Verbindung zwischen der inneren harten und der weichen DLC-Schicht herstellen, sodass die Beschichtung während der hohen Belastungen in der Einlaufphase nicht ihre Integrität und Funktion verliert. Zum anderen dient die erste Haftschicht als Haftvermittler zum Grundwerkstoff der Lauffläche und bildet damit die Basis für die Beständigkeit und Funktionsfähigkeit der Beschichtung insgesamt.

Die gewählten DLC-Schichtmaterialien erlauben eine gute Optimierung der Schichteigenschaften bezüglich ihrer individuellen Verwendung in der Beschichtung z.B. über die Variation des Wasserstoffgehalts oder der Art der zugesetzten Metalle. Insgesamt ergibt sich somit ein Schichtsystem, das sich durch eine beständig niedrige Reibung während der gesamten Lebensdauer des Gleitelements auszeichnet.

Bevorzugt weist die harte wasserstofffreie DLC-Schicht eine Härte zwischen etwa 1800 und etwa 3500 HV 0,02, die weiche wasserstoffhaltige, metall- und/oder metallkarbidhaltige DLC-Schicht eine Härte zwischen etwa 800 und etwa 1400 HV 0,002 und die harte wasserstoffhaltige DLC-Schicht eine Härte zwischen etwa 1800 und etwa 3100 HV 0,002 auf. Die unterschiedlichen Härten begründen sich wie oben dargestellt in den unterschiedlichen Funktionen der Einzelschichten in der Beschichtung. Die hohe Maximalhärte der inneren harten wasserstofffreien DLC-Schicht gewährleistet die Lebensdauerbeständigkeit. Die geringe Härte der weichen DLC-Zwischenschicht ist vorteilhaft für die mechanische Stabilisierung der Beschichtung und die etwas reduzierte Maximalhärte der äußeren harten wasserstoffhaltigen DLC-Schicht erweist sich als vorteilhaft für das Einlaufverhalten des Gleitelements. Ein verbessertes Einlaufverhalten bewirkt eine tribologische Stabilisierung der Laufpartner miteinander sowie eine bessere Anpassung des Gleitelements an die Geometrie des Laufpartners. Dabei erweisen sich Härten in den angegebenen Wertebereichen als besonders günstig.

Um die Funktionsfähigkeit und die Brauchbarkeit der Beschichtung zu gewährleisten ist es bevorzugt, dass ein Härteunterschied zwischen den harten DLC-Schichten und der weichen DLC-Schicht einem Faktor von etwa 1,2 bis etwa 4,4 entspricht. Geringere Härteunterschiede würden zu einem zu homogenen Schichtsystem mit sehr ähnlichen Schichteigenschaften führen und es würde z.B. der Effekt der mechanischen Stabilisierung oder eines optimalen Einlaufverhaltens oder der guten Lebensdauerbeständigkeit entfallen. Größere Härteunterschiede hingegen erscheinen technologisch wenig sinnvoll und hätten keine positiven Zusatzeffekte.

Mit Vorteil weist die weiche wasserstoffhaltige, metall- und/oder metallkarbidhaltige DLC-Schicht Phasen aus Wolfram und/oder Wolframkarbid und/oder Silizium und/oder Siliziumkarbid und/oder Chrom und/oder Chromkarbid auf. Es hat sich gezeigt, dass die Elemente W, Si und Cr, und/oder deren Karbide, enthalten in einer wasserstoffhaltigen, amorphen Kohlenstoffschicht, eine Schicht bilden, die einen guten Kompromiss zwischen Stabilisierungs- und Reibeigenschaften darstellt.

Bevorzugt sind/ist die erste und/oder die zweite Haftschicht metall-, insbesondere Cr-haltig. Die Haftschichten können dabei durch Niedertemperaturplasmaverfahren, z.B. durch physikalische Gasphasenabscheidung erzeugt werden.

Die Beschichtung der Lauffläche des Gleitelements weist bevorzugt eine Gesamtdicke von etwa 5 *µ*m bis zu etwa 50 *µ*m auf. Schichtdicken in diesem Bereich stellen sicher, dass die Einlaufschicht und die Stabilisierungsschicht genügend dick sind, um ihren Funktionen gerecht zu werden und, dass die Verschleißschutzschicht genügend Substanz aufweist, um ein gutes Reibverhalten im dauerhaften Betrieb zu gewährleisten. Das Schichtdickenverhältnis zwischen der Dicke der harten wasserstofffreien DLC-Schicht einschließlich der ersten Haftschicht und der Dicke der beiden wasserstoffhaltigen DLC-Schichten einschließlich der zweiten Haftschicht liegt zwischen etwa 1,1 und etwa 12. Somit wird ein Schichtaufbau bevorzugt, bei dem die als Einlaufschicht agierende DLC-Schicht stets dünner als die als Verschleißschutzschicht wirkende DLC-Schicht ausgeführt ist. Mit Vorteil können innerhalb dieses Wertebereichs die Schichtdickenverhältnisse variiert werden, so kann abhängig von den Einsatzbedingungen des Gleitelements z.B. eine verhältnismäßig dicke Einlaufschicht oder eine verhältnismäßig dünne Einlaufschicht realisiert werden.

Das Grundmaterial des Gleitelements kann aus Stahl oder Guss gebildet sein. Diese Materialien haben sich als besonders vorteilhafte Grundmaterialien für hochbelastete Gleitelemente, z.B. Kolbenringe, erwiesen.

Ferner kann eine Oberfläche mindestens einer DLC-Schicht mechanisch geglättet sein. Eine möglichst glatte Reibfläche trägt zur signifikanten Verringerung z.B. des Ring- und Linerverschleißes bei.

### Wege zur Ausführung der Erfindung

Als beispielhafte Ausführungsform der vorliegenden Erfindung ist ein komplexes Schichtsystem denkbar, bei dem auf dem Grundwerkstoff eines Gleitelements z.B. Stahl oder Guss von innen nach außen zunächst eine erste chromhaltige Haftschicht aufgebracht ist. Auf dieser Schicht ist dann eine harte wasserstofffreie DLC-Schicht aufgebracht, welche die Lebensdauerbeständigkeit des Schichtsystems insgesamt absichert. Daran schließt sich eine weitere metallhaltige Haftschicht, gefolgt von einer vergleichsweise weichen wasserstoffhaltigen, metall- und/oder metallkarbidhaltigen DLC-Schicht an, welche vor allem mechanische Scherkräfte aufnimmt und stabilisierend wirkt. Nach außen hin wird das Schichtsystem durch eine harte wasserstoffhaltige DLC-Schicht abgeschlossen, die eine geringer Maximalhärte als die innere harte DLC-Schicht aufweist und als Einlaufschicht des Gleitelements dient.

## Patentansprüche

1. Gleitelement, insbesondere Kolbenring, mit mindestens einer Lauffläche, wobei die Lauffläche eine Beschichtung aufweist, die von innen nach außen zumindest eine erste Haftschicht, eine harte wasserstofffreie DLC-Schicht, eine zweite Haftschicht, eine weiche wasserstoffhaltige, metall- und/oder metallkarbidhaltige DLC-Schicht, die weicher ist als die harte wasserstofffreie DLC-Schicht, und eine harte wasserstoffhaltige DLC-Schicht, die härter ist als die weiche wasserstoffhaltige, metall- und/oder metallkarbidhaltige DLC-Schicht, aufweist.

2. Gleitelement gemäß Anspruch 1, bei dem die harte wasserstofffreie DLC-Schicht eine Härte zwischen etwa 1800 und etwa 3500 HV 0,02, die weiche wasserstoffhaltige, metall- und/oder metallkarbidhaltige DLC-Schicht eine Härte zwischen etwa 800 und etwa 1400 HV 0,002 und die harte wasserstoffhaltige DLC-Schicht eine Härte zwischen etwa 1800 und etwa 3100 HV 0,002 aufweist.

3. Gleitelement gemäß einem der vorangegangenen Ansprüche, bei dem ein Härteunterschied zwischen den harten DLC-Schichten und der weichen DLC-Schicht einem Faktor von etwa 1,2 bis etwa 4,4 entspricht.

4. Gleitelement gemäß einem der vorangegangenen Ansprüche, bei dem die weiche wasserstoffhaltige, metall- und/oder metallkarbidhaltige DLC-Schicht Phasen aus Wolfram und/oder Wolframkarbid und/oder Silizium und/oder Siliziumkarbid und/oder Chrom und/oder Chromkarbid aufweist.

5. Gleitelement gemäß einem der vorangegangenen Ansprüche, bei dem die erste und/oder die zweite Haftschicht bevorzugt metall-, insbesondere Cr-haltig sind/ist.

6. Gleitelement gemäß einem der vorangegangenen Ansprüche, bei dem die Beschichtung eine Gesamtdicke von etwa 5 *µ*m bis zu etwa 50 *µ*m aufweist.

7. Gleitelement gemäß einem der vorangegangenen Ansprüche, bei dem das Schichtdickenverhältnis zwischen der Dicke der harten wasserstofffreien DLC-Schicht einschließlich der ersten Haftschicht und der Dicke der wasserstoffhaltigen DLC-Schichten einschließlich der zweiten Haftschicht zwischen etwa 1,1 und etwa 12 liegt.

8. Gleitelement gemäß einem der vorangegangenen Ansprüche, bei dem dessen Grundmaterial Stahl oder Guss ist.

9. Gleitelement gemäß einem der vorangegangenen Ansprüche, bei dem eine Oberfläche mindestens einer DLC-Schicht geglättet ist.

## Claims

1. Sliding element, in particular piston ring, having at least one running surface, wherein the running surface has a coating which from the inside to the outside has at least one first adhesive layer, a hard hydrogen-free DLC layer, a second adhesive layer, a soft hydrogen-containing, metal-containing and/or metal carbide-containing DLC layer which is softer than the hard hydrogen-free DLC layer, and a hard hydrogen-containing DLC layer which is harder than the soft hydrogen-containing, metal-containing and/or metal carbide-containing DLC layer.

2. Sliding element according to claim 1, in which the hard hydrogen-free DLC layer has a hardness between about 1,800 and about 3,500 HV 0.02, the soft hydrogen-containing, metal-containing and/or metal carbide-containing DLC layer has a hardness between about 800 and about 1,400 HV 0.002 and the hard hydrogen-containing DLC layer has a hardness between about 1,800 and about 3,100 HV 0.002.

3. Sliding element according to one of the preceding claims, in which a hardness difference between the hard DLC layers and the soft DLC layer corresponds to a factor of about 1.2 to about 4.4.

4. Sliding element according to one of the preceding claims, in which the soft hydrogen-containing, metal-containing and/or metal carbide-containing DLC layer has phases of tungsten and/or tungsten carbide and/or silicon and/or silicon carbide and/or chromium and/or chromium carbide.

5. Sliding element according to one of the preceding claims, in which the first and/or the second adhesive layer is/are preferably metal-containing, in particular Cr-containing.

6. Sliding element according to one of the preceding claims, in which the coating has a total thickness of about 5 *µ*m up to about 50 *µ*m.

7. Sliding element according to one of the preceding claims, in which the layer thickness ratio between the thickness of the hard hydrogen-free DLC layer including the first adhesive layer and the thickness of the hydrogen-containing DLC layers including the second adhesive layer lies between about 1.1 and about 12.

8. Sliding element according to one of the preceding claims, in which the base material thereof is steel or cast material.

9. Sliding element according to one of the preceding claims, in which a surface of at least one DLC layer is smoothed.

## Revendications

1. Elément coulissant, en particulier segment de piston, comprenant au moins une surface mobile, dans lequel la surface mobile présente un revêtement, qui présente, de l'intérieur vers l'extérieur, au moins une première couche adhésive, une couche DLC dure sans hydrogène, une deuxième couche adhésive, une couche DLC molle contenant de l'hydrogène, un métal et/ou du carbure de métal, laquelle est plus molle que la couche DLC dure sans hydrogène, et une couche DLC dure contenant de l'hydrogène, qui est plus dure que la couche DLC molle contenant de l'hydrogène, un métal et/ou un carbure de métal.

2. Elément coulissant selon la revendication 1, où la couche DLC dure sans hydrogène présente une dureté comprise entre environ 1.800 et environ 3.500 HV 0,02, la couche DLC molle contenant de l'hydrogène, un métal et/ou un carbure de métal présente une dureté comprise entre environ 800 et environ 1.400 HV 0,002, et la couche DLC dure contenant de l'hydrogène présente une dureté comprise entre environ 1.800 et environ 3.100 HV 0,002.

3. Elément coulissant selon l'une quelconque des revendications précédentes, où une différence de dureté entre les couches DLC dures et la couche DLC molle correspond à un facteur d'environ 1,2 à environ 4,4.

4. Elément coulissant selon l'une quelconque des revendications précédentes, où la couche DLC molle contenant de l'hydrogène, un métal et/ou un carbure de métal présente des phases composées de tungstène et/ou de carbure de tungstène et/ou de silicium et/ou de carbure de silicium et/ou de chrome et/ou de carbure de chrome.

5. Elément coulissant selon l'une quelconque des revendications précédentes, où la première et/ou la deuxième couche adhésive contiennent de manière préférée un métal, en particulier du Cr.

6. Elément coulissant selon l'une quelconque des revendications précédentes, où le revêtement présente une épaisseur totale d'environ 5 µm à environ 50 µm.

7. Elément coulissant selon l'une quelconque des revendications précédentes, où le rapport des épaisseurs de couche entre l'épaisseur de la couche DLC dure sans hydrogène y compris la première couche adhésive et l'épaisseur des couches DLC contenant de l'hydrogène y compris la deuxième couche adhésive est compris entre environ 1,1 et environ 12.

8. Elément coulissant selon l'une quelconque des revendications précédentes, où son matériau de base est de l'acier ou de la fonte.

9. Elément coulissant selon l'une quelconque des revendications précédentes, où une surface au moins d'une couche DLC est lissée.
